# EUROPEAN PATENT APPLICATION

(11) **EP 4 092 888 A1**
(43) Date of publication of application: **23.11.2022**
(21) Application number: 21174216.8
(22) Date of filing: 17.05.2021
(51) Int. Cl.: H02K 16/00, H02K 7/00, H02K 7/10, B60K 1/02

(54) **AN ELECTRIC DRIVE UNIT FOR A VEHICLE**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: BAN, Branko, 41830 GÖTEBORG (SE); SILVA PEREIRA, Luiz Filipe, 43835 LANDVETTER (SE)
(74) Representative: Zacco Sweden AB

(57) **Abstract**

The invention relates to an electric drive unit (1) for a vehicle. The electric drive unit comprises a first electric machine (2) and a second electric machine (3) arranged one after the other in an axial direction (4). The second electric machine has a hollow rotor (5) receiving a first end (6) of a rotor shaft (7) of the first electric machine (2) inside the rotor. The electric drive unit (1) further comprises a one way clutch (8) arranged to connect the rotor (5) of the second electric machine (2) and the rotor shaft (7) of the first electric machine (2) to each other, which one way clutch (8) is arranged inside the second electric machine (3).

## Description

### TECHNICAL FIELD

The invention relates to an electric drive unit for a vehicle, which electric drive unit comprises a first electric machine and a second electric machine arranged one after the other in an axial direction.

### BACKGROUND

An electric vehicle is usually provided with one or more electric motors and a gearbox for propulsion of the vehicle. Such an electric motor designed for covering the power and torque required for the current driving cycle often does not have maximum efficiency over a large area of the available operation region. In addition, the space available for the electric motor is limited. Thus, there are boundary conditions with respect to costs, weight and available space at the same time as it should be possible to use the electric motor in an efficient way.

### SUMMARY

An objective of the invention is to provide an electric drive unit for a vehicle, which electric drive unit has an improved performance with respect to the torque and power output.

The objective is achieved by an electric drive unit for a vehicle, wherein the electric drive unit comprises a first electric machine and a second electric machine arranged one after the other in an axial direction, and the second electric machine has a hollow rotor receiving a first end of a rotor shaft of the first electric machine inside the rotor, and wherein the electric drive unit further comprises a one way clutch arranged to connect the rotor of the second electric machine and the rotor shaft of the first electric machine to each other, which one way clutch is arranged inside the second electric machine.

The one way clutch can be arranged at least partly inside the rotor of the second electric machine and optionally the entire one way clutch is arranged inside the rotor of the second electric machine.

The invention is based on the insight that by such an electric drive unit, the performance can be improved at the same time as the dimensions of the electric drive unit can be kept relatively small providing a compact solution. By the use of the one way clutch, the first electric machine and the second electric machine can be mechanically connected to each other in a way enabling the first electric machine and the second electric machine to be controlled for achieving an improved overall efficiency for the driving cycle. Depending on the torque and/or power required, one of the first electric machine and the second electric machine or both the first electric machine and the second electric machine can be used for the propulsion. The first electric machine and the second electric machine can be selected with different performance characteristics such that the requisite total output from the electric drive unit can be achieved for varying torque and power demands of the driving cycle.

The first and second electric machines can be electric motors or suitably combined electric motors and generators. The first electric machine and the second electric machine are preferably individual electric machines each having a stator and a rotor, wherein the first electric machine and the second electric machine are individually controlled and individually powered by an inverter.

The electric drive unit is preferably connected to a gearbox, such as a single ratio gear box. A second end of the rotor shaft of the first electric machine can be arranged as an output shaft for the first electric machine, and for the second electric machine, for driving a transmission.

The electric drive unit suitably comprises a housing, wherein the rotor of the second electric machine is journaled relative to the housing by a first bearing and relative to the rotor shaft of the first electric machine by a second bearing.

The one way clutch can be a mechanical clutch, such as for example a sprag clutch, trapped roller clutch, a selectable one way clutch with engage/disengage capabilities, or similar.

According to one embodiment, the one way clutch is configured such that when the rotor of the second electric machine and the rotor shaft of the first electric machine are driven at the same rotational speed in a first rotation direction, torque can be transferred from the rotor of the second electric machine to the rotor shaft of the first electric machine via the one way clutch. Hereby, it is possible to provide power from both the first electric machine and the second machine at the same time.

According to another embodiment, the one way clutch is configured such that when the rotor shaft of the first electric machine is driven at higher rotational speed than the rotor of the second electric machine in the first rotation direction, the rotor of the second electric machine will freewheel relative to the rotor shaft of the first electric machine via the one way clutch, not providing any torque. Hereby, power can be provided by the first electric machine without rotating the second electric machine. This in turn enables the second electric machine to be of a type having relatively high losses when free spinning, since the second electric machine can be standing still when only the first electric motor provides power.

According to a further embodiment, the one way clutch is configured such that when the rotor of the second electric machine is driven with a rotational speed in the first rotation direction, and the first electric machine is not energized, the rotor shaft of the first electric machine is driven by the second electric machine via the one way clutch, while the first electric machine is free spinning. Hereby, power from the electric drive unit can be provided solely by the second electric machine.

The one way clutch is preferably a selectable one way clutch configured such that the rotor of the second electric machine is disconnectable from the rotor shaft of the first electric machine, allowing only the first electric machine to provide torque when the second electric machine is disconnected by the selectable one way clutch. Hereby, power can be provided by the first electric machine without rotating the second electric machine. This in turn enables the second electric machine to be of a type having relatively high losses when free spinning, since the second electric machine can be standing still when only the first electric motor provides power.

Thus, when the selectable one way clutch is activated, the rotor of the second electric machine and the rotor shaft of the first electric machine are connected to each other enabling torque to be transferred from the second electric machine to the rotor shaft of the first electric machine in one rotational direction, and when the selectable one way clutch is deactivated, the rotor of the second electric machine and the rotor shaft of the first electric machine are disconnected from each other, not enabling any torque to be transferred therebetween.

The first electric machine and the second electric machine are preferably selected such that the first electric machine is a synchronous reluctance electric machine or induction machine and the second electric machine is a permanent magnet electric machine, since a synchronous reluctance electric machine or induction machine has less or negligible losses due to free spinning, whereas free spinning of a permanent magnet electric machine is suitably to be avoided due to losses associated with the permanent magnets.

By this combination of electric machines, the overall performance of the electric drive unit can be increased. For example, the first electric machine can be designed for a maximal torque output over a broader speed range, and the second electric machine can be designed for a higher maximal torque output over a narrower speed range.

According to a further embodiment, the first electric machine and the second electric machine are configured such that for a rotational speed ω in a first speed range where 0<ω≤ω1, the second electric machine provides a higher maximal torque output than the first electric machine, and for a rotational speed ω in a second speed range where ω1<ω≤ω2, the first electric machine provides a higher maximal torque output than the second electric machine. Hereby, the requisite power can be achieved together with a high efficiency of the electric drive unit.

According to a further embodiment, the first electric machine and the second electric machine are configured such that the second electric machine has a highest maximal torque output which is higher than the highest maximal torque output of the first electric machine, and the first electric machine has a broader rotational speed range in which the highest maximal torque output of the first electric machine can be provided, than a rotational speed range of the second electric machine in which the highest maximal torque output of the second electric machine can be provided. Hereby, the overall power performance and the efficiency of electric drive unit can be increased.

The invention also relates to a method for driving a vehicle and a control unit for controlling an electric drive unit. The advantages of the method and the control unit are substantially the same as the advantages already discussed hereinabove with reference to the different embodiments of the electric drive unit.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
Fig. 1 is a perspective view of one example embodiment of an electric drive unit according to the invention,
Fig. 2 is cut view of the electric drive unit in Fig. 1, and
Fig. 3 is a graph showing maximal torque vs speed of the electric drive unit.

### DETAILED DESCRIPTION OF EXAMPLE EMBODIMENTS

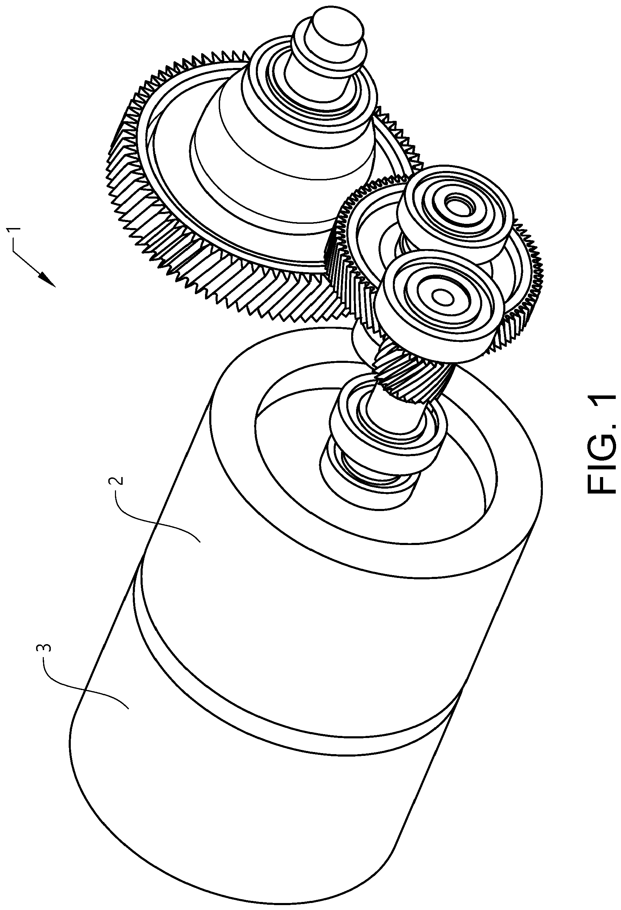

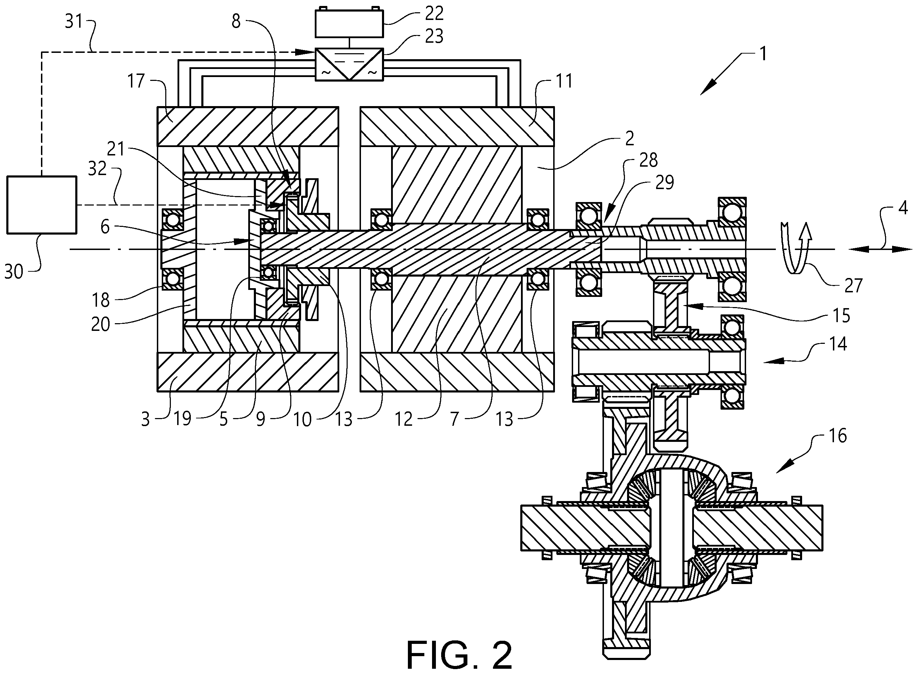

Fig. 1 is a perspective view of an electric drive unit 1 for a vehicle. The electric drive unit 1 can be used for propulsion of an electric vehicle. Fig. 2 shows the electric drive unit 1 in a cut view.

The electric drive unit 1 comprises a first electric machine 2 and a second electric machine 3 arranged one after the other in an axial direction 4. The second electric machine 3 has a hollow rotor 5 receiving a first end 6 of a rotor shaft 7 of the first electric machine 2 inside the rotor 5. The electric drive unit 1 further comprises a one way clutch 8 arranged to connect the rotor 5 of the second electric machine 3 and the rotor shaft 7 of the first electric machine 2 to each other. The one way clutch 8 which is arranged inside the second electric machine 3 has a first component 9 rotationally locked to the rotor 5 of the second electric machine 3 and a second component 10 rotationally locked to the rotor shaft 7 of the first electric machine 2. The one way clutch 8 is suitably arranged at least partly inside the rotor 5 of the second electric machine 3. In the example embodiment illustrated in Figs. 1 and 2, the first component 9 is arranged inside and attached to the hollow rotor 5 of the second electric machine 3. The second component 10 attached to the rotor shaft 7 of the first electric machine 2 is arranged partly inside the rotor 5 of the second electric machine 3.

The first electric machine 2 has a stator 11 and a rotor 12 arranged on the rotor shaft 7. The rotor shaft 7 is journaled by bearings 13 relative to a housing (not shown) of the electric drive unit 1. The rotor shaft 7 has a second end 28 which is arranged as an output shaft 29 for the first electric machine 2, and for the second electric machine 3, for driving a transmission 14. The transmission 14 may comprises a gearbox 15 and a final drive 16.

The second electric machine 3 has a stator 17 and the hollow rotor 5. The rotor 5 of the second electric machine 3 is journaled relative to the housing by a first bearing 18 and relative to the rotor shaft 7 of the first electric machine 2 by a second bearing 19. For this purpose, flanges 20, 21 attached to the rotor 5 can be arranged inside the hollow rotor 5. A first flange 20 providing a shaft extension for the first bearing 18 and a second flange 21 for the second bearing 19 are attached rotationally locked to the rotor 5.

The first electric machine 2 and/or the second electric machine 3 is suitably a combined electric motor and generator, though in another embodiment each electric machine could be an electric motor only. The first and second electric machines 2, 3 can be electrically connected to an energy storage device 22, such as a battery.

As schematically illustrated in Fig. 2, each electric machine can be an AC motor/generator and then the electric machine is connected to an AC/DC inverter 23 which in turn is connected to the energy storage device 22. The inverter 23 can be used for converting AC to DC when charging the battery by the generator function of the electric machine, and for converting DC to AC when powering the electric machine by the battery. Optionally, instead of one inverter, two separated inverters can be used, one inverter for each of the first and second electric machines.

The first and second electric machines 2, 3 can be electrically connected to each other for transferring energy between the machines. For example, the first electric machine 2 and the second electric machine 3 are electrically connected to the energy storage device 22.

Thereby, the first electric machine 2 and the second electric machine 3 are electrically connected to each other.

The first electric machine can be a synchronous reluctance electric machine or induction machine and the second electric machine can a permanent magnet electric machine. For example, the second electric machine can have permanent magnets arranged in the interior of the rotor or on an outer surface of the rotor.

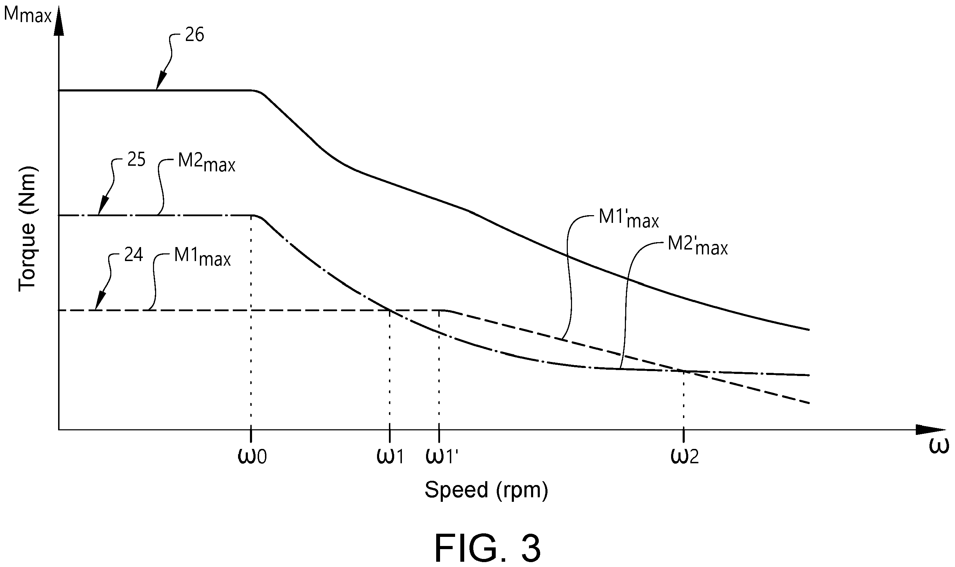

Fig. 3 is a graph showing maximal torque Mₘₐₓ vs rotational speed ω for the first electric machine 2 and the second electric machine 3. A first curve 24 for the first electric machine 2 is illustrated with a dashed line and a second curve 25 for the second electric machine 3 is illustrated with a dotted line. In addition, a third curve 26 constituting the sum of the first curve 24 and the second curve 25 is illustrated by a solid line.

The first electric machine 2 and the second electric machine 3 can be configured such that for a rotational speed ω in a first lower speed range where 0<ω≤ω1, the second electric machine 3 can provide a higher maximal torque output M2ₘₐₓ than the first electric machine 2 providing the maximal torque output M1ₘₐₓ. For a rotational speed ω in a second higher speed range where ω1<ω≤ω2, the first electric machine 2 can provide a higher maximal torque output M1'ₘₐₓ than the second electric machine 3 providing the maximal torque output M2'ₘₐₓ.

Further, the first electric machine 2 and the second electric machine 3 can be configured such that the second electric machine 3 has a highest maximal torque output M2ₘₐₓ which is higher than the highest maximal torque output M1ₘₐₓ of the first electric machine 2, and the first electric machine 2 has a broader rotational speed range 0<ω≤ω1' in which the highest maximal torque output M1ₘₐₓ of the first electric machine 2 can be provided, than a rotational speed range 0<ω≤ω0 of the second electric machine 3 in which the highest maximal torque output M2ₘₐₓ of the second electric machine 3 can be provided.

Fig. 2 shows the one way clutch 8. The one way clutch 8 is suitably configured such that when the rotor 5 of the second electric machine 3 and the rotor shaft 7 of the first electric machine 2 are driven at the same rotational speed in a first rotation direction 27, torque can be transferred from the rotor 5 of the second electric machine 3 to the rotor shaft 7 of the first electric machine 2 via the one way clutch 8. This means that torque both from the first electric machine 2 and the second electric machine 3 can be provided by the output shaft 29 to the gearbox 15.

The one way clutch 8 can be configured such that when the rotor shaft 7 of the first electric machine 2 is driven at higher rotational speed than the rotor 5 of the second electric machine 3 in the first rotation direction 27, the rotor 5 of the second electric machine 3 will freewheel relative to the rotor shaft 7 of the first electric machine 2 via the one way clutch 8, not providing any torque. In this way, free spinning of the rotor 5 of the second electric machine 3 can be avoided, and the second electric machine 3 can be standing still when not energized, at the same time as the first electric machine 2 provides torque.

Further, the one way clutch 8 can also be configured such that when the rotor 5 of the second electric machine 3 is driven with a rotational speed in the first rotation direction 27, and the first electric machine 2 is not energized, the rotor shaft 7 of the first electric machine 2 is driven by the second electric machine 3 via the one way clutch 8, while the first electric machine 2 is free spinning. This means that the electric drive unit 1 can provide torque solely by the second electric machine 3.

Optionally, the one way clutch is a selectable one way clutch 8 configured such that the rotor 5 of the second electric machine 3 is disconnectable from the rotor shaft 7 of the first electric machine 2, allowing only the first electric machine 2 to provide torque when the second electric machine 3 is disconnected by the selectable one way clutch 8. When the rotor 5 of the second electric machine 3 is disconnected, no torque in any direction can be provided by the second electric machine 3.

The invention also relates to a method for driving a vehicle (not shown), wherein the vehicle has an electric drive unit 1 as described hereinabove. The method comprises the step of providing torque solely by the first electric machine 2 when the requisite torque M_{req} is less than a predetermined torque value Mₚᵣₑ, and providing torque by the first electric machine 2 and the second electric machine 3 when the requisite torque is equal to or exceeds the predetermined torque value Mₚᵣₑ. The predetermined torque value Mₚᵣₑ can be for example the maximal torque output value M1ₘₐₓ of the first electric machine 2.

Further, the invention relates to a control unit 30 for controlling the electric drive unit 1. The control unit is schematically illustrated in Fig. 2.

The control unit 30 is configured to provide control signals 31 to the first electric machine 2 and the second electric machine 3 such that torque is provided solely by the first electric machine 2 when the requisite torque M_{req} is less than a predetermined torque value Mₚᵣₑ, and torque is provided by the first electric machine 2 and the second electric machine 3 when the requisite torque is equal to or exceeds the predetermined torque value Mₚᵣₑ. The control signals 31 from the control unit 30 can be transmitted to the inverter 23 for controlling the first electric machine 2 and the second electric machine 3.

The control unit 30 may comprise one or more microprocessors and/or one or more memory devices or any other components for executing computer programs or receiving and/or sending control signals for providing the control function. Particularly, the control unit 30 is preferably provided with a computer program comprising program code means for performing all steps of any embodiment of the method described herein. The control unit can be a separate component or be integrated in another controller. The control unit can be arranged to control other components than the first electric machine and the second electric machine.

Optionally, the control unit 30 can be used for controlling the one way clutch 8. For example, when a selectable one way clutch 8 is used, the control unit 30 can be used for providing signals 32 to activate or deactivate the selectable one way clutch 8.

It is to be understood that the present invention is not limited to the embodiments described above and illustrated in the drawings; rather, the skilled person will recognize that many changes and modifications may be made within the scope of the appended claims.

## Claims

1. An electric drive unit (1) for a vehicle, the electric drive unit comprising a first electric machine (2) and a second electric machine (3) arranged one after the other in an axial direction (4), the second electric machine having a hollow rotor (5) receiving a first end (6) of a rotor shaft (7) of the first electric machine (2) inside the rotor, the electric drive unit (1) further comprising a one way clutch (8) arranged to connect the rotor (5) of the second electric machine (2) and the rotor shaft (7) of the first electric machine (2) to each other, which one way clutch (8) is arranged inside the second electric machine (3).

2. An electric drive unit according to claim 1, **characterized in that** the one way clutch (8) is arranged at least partly inside the rotor (5) of the second electric machine (3).

3. An electric drive unit according to claim 1 or 2, **characterized in that** the one way clutch (8) is configured such that when the rotor (5) of the second electric machine (3) and the rotor shaft (7) of the first electric machine (2) are driven at the same rotational speed in a first rotation direction (27), torque can be transferred from the rotor (5) of the second electric machine (3) to the rotor shaft (7) of the first electric machine (2) via the one way clutch (8).

4. An electric drive unit according to claim 3, **characterized in that** the one way clutch (8) is configured such that when the rotor shaft (7) of the first electric machine (2) is driven at higher rotational speed than the rotor (5) of the second electric machine (3) in the first rotation direction (27), the rotor (5) of the second electric machine (3) will freewheel relative to the rotor shaft (7) of the first electric machine (2) via the one way clutch (8), not providing any torque.

5. An electric drive unit according to claim 3 or 4, **characterized in that** the one way clutch (8) is configured such that when the rotor (5) of the second electric machine (3) is driven with a rotational speed in the first rotation direction (27), and the first electric machine (2) is not energized, the rotor shaft (7) of the first electric machine (2) is driven by the second electric machine (3) via the one way clutch (8), while the first electric machine (2) is free spinning.

6. An electric drive unit according to any preceding claim, **characterized in that** the one way clutch (8) is a selectable one way clutch configured such that the rotor (5) of the second electric machine (3) is disconnectable from the rotor shaft (7) of the first electric machine (2), allowing only the first electric machine (2) to provide torque when the second electric machine (3) is disconnected by the selectable one way clutch (8).

7. An electric drive unit according to any preceding claim, **characterized in that** the first electric machine (2) is a synchronous reluctance electric machine

8. An electric drive unit according to any of claims 1-6, **characterized in that** the first electric machine (2) is an induction machine.

9. An electric drive unit according to any preceding claim, **characterized in that** the second electric machine (3) is a permanent magnet electric machine.

10. An electric drive unit according to any preceding claim, **characterized in that** the electric drive unit comprises a housing, and the rotor (5) of the second electric machine (3) is journaled relative to the housing by a first bearing (18) and relative to the rotor shaft (7) of the first electric machine (2) by a second bearing (19).

11. An electric drive unit according to any preceding claim, **characterized in that** the first electric machine (2) and the second electric machine (3) are configured such that for a rotational speed ω in a first speed range where 0<ω≤ω1, the second electric machine (3) provides a higher maximal torque output (M2ₘₐₓ) than the first electric machine (2), and for a rotational speed ω in a second speed range where ω1<ω≤ω2, the first electric machine (2) provides a higher maximal torque output (M1'ₘₐₓ) than the second electric machine (3).

12. An electric drive unit according to any preceding claim, **characterized in that** the first electric machine (2) and the second electric machine (3) are configured such that the second electric machine (3) has a highest maximal torque output (M2ₘₐₓ) which is higher than the highest maximal torque output (M1ₘₐₓ) of the first electric machine (2), and the first electric machine (2) has a broader rotational speed range in which the highest maximal torque output (M1ₘₐₓ) of the first electric machine (2) can be provided, than a rotational speed range of the second electric machine (3) in which the highest maximal torque output (M2ₘₐₓ) of the second electric machine (3) can be provided.

13. An electric drive unit according to any preceding claim, **characterized in that** a second end (28) of the rotor shaft (7) of the first electric machine (2) is arranged as an output shaft (29) for the first electric machine (2), and for the second electric machine (3), for driving a transmission (14).

14. A method for driving a vehicle, the vehicle having an electric drive unit (1) comprising a first electric machine (2) and a second electric machine (3) arranged one after the other in an axial direction (4), the second electric machine (3) having a hollow rotor (5) receiving a first end (6) of a rotor shaft (7) of the first electric machine (2) inside the rotor, the electric drive unit (1) further comprising a one way clutch (8) arranged to connect the rotor (5) of the second electric machine (3) and the rotor shaft (7) of the first electric machine (2) to each other, which one way clutch (8) is arranged inside the second electric machine (3), the method comprising the step of providing torque solely by the first electric machine (2) when the requisite torque M_{req} is less than a predetermined torque value Mₚᵣₑ, and providing torque by the first electric machine (2) and the second electric machine (3) when the requisite torque is equal to or exceeds the predetermined torque value.

15. A control unit (30) for controlling an electric drive unit, the electric drive unit (1) comprising a first electric machine (2) and a second electric machine (3) arranged one after the other in an axial direction (4), the second electric machine (3) having a hollow rotor (5) receiving a first end (6) of a rotor shaft (7) of the first electric machine (2) inside the rotor, the electric drive unit (1) further comprising a one way clutch (8) arranged to connect the rotor (5) of the second electric machine (3) and the rotor shaft (7) of the first electric machine (2) to each other, which one way clutch (8) is arranged inside the second electric machine (3), the control unit (30) being configured to provide control signals (31) to the first electric machine (2) and the second electric machine (3) such that torque is provided solely by the first electric machine (2) when the requisite torque M_{req} is less than a predetermined torque value Mₚᵣₑ, and torque is provided by the first electric machine (2) and the second electric machine (3) when the requisite torque is equal to or exceeds the predetermined torque value.
